# EUROPEAN PATENT SPECIFICATION

(11) **EP 4 194 499 B1**
(45) Date of publication and mention of the grant of the patent: **29.11.2023**
(21) Application number: 21213147.8
(22) Date of filing: 08.12.2021
(51) Int. Cl.: C08L 23/06

(54) **NOVEL RECYCLING PROCESS OF POLYETHYLENE**
NEUES RECYCLINGVERFAHREN FÜR POLYETHYLEN
NOUVEAU PROCÉDÉ DE RECYCLAGE DE POLYÉTHYLÈNE

(43) Date of publication of application: 14.06.2023
(73) Proprietor: Nexam Chemical AB, 234 35 Lomma (SE)
(72) Inventor: Pisciotti, Francesco, 247 63 Veberöd (SE); Selling, Hugo, 212 11 Malmö (SE); Keivanshokouh, Amin, 226 46 Lund (SE); Solano Arribas, Carlos, 223 53 Lund (SE)
(74) Representative: Ström & Gulliksson AB

(56) References cited:
- EP-A2- 1 433 811
- WO-A1-2017/202802
- US-A1- 2005 049 335

## Description

### Technical field

The present invention relates to a process for recycling post-consumer and/or post-industrial polyethylene composition.

### Background of the invention

Recycling of waste products has become increasingly common practice in the last decades. The recycling of plastic materials is important and widely carried out by many industries and households around the world. A multitude of everyday consumer items are made from plastic materials, such as bottles, bags, products, and especially liquid food board-based packaging. It is important to recycle and reuse the polymers.

However, it is necessary to monitor and ensure the quality of the recycled plastics. An object of particular importance in recycling polyethylene is to meet processability requirements. Polyethylene is recycled from various processes. Recycled polyethylene has at least been used once. The reclaimed polyethylene originates from post-consumer and/or post-industrial uses. Most recycled plastics are mixed into a single stream which is collected and processed by a material recovery facility (MRF). At the MRF, materials are sorted, washed, granulated, and packaged for resale. Plastics can be sorted into individual materials, such as high-density polyethylene (HDPE) or poly(ethylene terephthalate) (PET), or mixed streams of other common plastics, such as polypropylene (PP), low-density polyethylene (LDPE), poly(vinyl chloride) (PVC), polystyrene (PS), polycarbonate (PC), and polyamides (PA). The single or mixed streams can then be further sorted, washed, and reprocessed into a pellet that is suitable for selected purposes. Though recycled plastics are sorted into predominately uniform streams and are washed with aqueous and/or caustic solutions, the final reprocessed streams remain contaminated with other plastic and the properties of the stream vary. For example, there will always be small amount of polypropylene in the recycled polyethylene stream.

One particular stream from post-consumer recycling is liquid food board-packages. This stream comprises liquid food board-packages with and without aluminium layers or other oxygen barrier layers. These packages have an inner layer of plastic. The purpose of this layer is to preserve the liquid food, which can be milk, juice or any other liquid or semiliquid food and to seal the package. This layer has food approval, typically an LDPE. Next to this layer there can be barrier layers that prevent oxygen diffusion, adhesion layers to either paper board or aluminium or other oxygen barrier layers. The aluminium layer is used as an oxygen barrier. The paper board layer is typically outside the optional aluminium layer. Commonly there is an outer layer made of polyethylene, with an optional adhesion layer to the board. The liquid food board-packages are complex, and each layer has different purposes. Most layers/construction comprise polyethylene. Most of the polyethylene is LDPE, but also linear low-density polyethylene (LLDPE) is used. In addition, adhesion layers can be made of ethylene methacrylic acid copolymer (EMAA), ethylene acrylic acid copolymer (EAA) or maleic anhydride grafted polyolefins (MAH). The adhesion layers typically comprise polar polymers. The adhesion layers can be treated by ozone treatment to increase polarity and thus increase adhesion to aluminium layer. The stream further comprises HDPE that originates from caps, commonly grinded.

Delamination of the liquid food board-packages is commonly made in a paper mill and the paper fibres are removed with water and recycled.

In the case of a liquid food board-packages without aluminium layer the remaining mixture comprises a mixture of laminated polyethylene films and hard plastic components, used for caps and closures, which typically comprise mainly HDPE. The recycled polyethylene stream is in the form of flakes.

In the other case in which the liquid food board-packages with an aluminium layer the remaining mixture comprises a mixture of strongly laminated foil of polyethylene and aluminium. It further comprises hard plastic components used for caps and closures, which typically comprise mainly HDPE.

The foil can be separated by several methods such as US5421525, which was improved in CN101891903B, which describes an acid-based delamination process. The delamination is done in an organic acid solution at elevated temperatures. Examples of organic acids are acetic or formic acids. The aluminium and polyethylene layers are separated. The recycled polyethylene stream is free from aluminium residues and is in the form of flakes.

Other processes for delamination are described in US2021086406A1, which comprise a mixture of water, carboxylic acid, carboxylate salt and passivation agent. EP3554834B1 describes a mixture of water carboxylic acid, phosphoric acid and alkali metal. Further methods are described in US 10682788B2, which comprise water, a swelling agent, an anionic surfactant, a carboxylic acid, and at least one of a co-surfactant or a hydrotrope.

The properties of recycled streams vary. Thus, usefulness of the recycled polyethylene will vary. One solution to this is to test the properties of every lot. This would be difficult, costly, and impractical. To ensure stable properties of the recycled polyethylene stream resilient solutions must be found that ensure the recycled polyethylene meets the specification for the application.

WO2002088239A1 and US20050049335A1 disclose compositions with different types of polyethylene and polyethylene with silane groups. They require virgin polymers.

As used herein, the term "recycled polymer" refers to a polymer used for a previous purpose and then recovered for further processing.

As used herein, the term "post-consumer" refers to a source of material that originates after the end consumer has used the material in consumer goods or products.

As used herein, the term "post-consumer recycle" (PCR) refers to a material that is produced after the end consumer has used the material and has disposed the material in a waste stream.

As used herein, the term "post-industrial" refers to a source of a material that originates during the manufacture of a good or product.

As used herein, the term "recycled polyethylene" can be obtained from reclaimed polyethylene or from post-consumer recycle polyethylene or post-industrial polyethylene. And the recycled polyethylene becomes a raw material that is used in the production of new products.

Polyethylene has at least 50 weight% of ethylene monomer.

### Summary of the invention

The invention relates to a method for producing a polyethylene composition (P) from recycled polyethylene. In particular, the invention relates to a method in order to provide a polyethylene composition (P) from recycled polyethylene having a lower MFR₂ than the recycled polyethylene used as starting material for the polyethylene composition (P).

Thus, when polyethylene is recycled the MFR₂ is increased. This will make the recycled polyethylene less useful because many applications require low MFR₂.

In industrial production of virgin polyethylene, the MFR₂ is controlled by the production parameters. Therefore, there is no need to change the MFR₂ of virgin polyethylene.

A purpose of this invention is to lower the MFR₂ of the recycled polyethylene composition (P).

The polyethylene products to be recycled are often reprocessed into a pellet that is suitable for selected purposes. Process streams from single or mixed sources of polyethylene products may be used for granulation. Granulated means that the plastic is compounded and pelletized. This will increase the MFR₂ of the plastic, commonly referred to degradation of the plastic. However, it has turned out that by introducing an ethylene copolymer (B) comprising hydrolysable silicon-containing groups the MFR₂ may be lowered during compounding. Such an ethylene copolymer (B) suitably used is for example disclosed in EP2582743 A1. Compounding is suitably done in a compounding machine wherein the polymer is mixed. Compounding is done in suitable extruders with efficient mixing. A suitable level of mixing is required to get a homogenous polymer melt and even polymer properties.

The recycled polyethylene of this invention is for example intended for various applications for example film blowing, pipe extrusion, injection blow moulding, injection moulding and extrusion foaming applications. All these applications require low MFR₂ of the recycled polyethylene composition (P).

In one application the recycled polyethylene is blown into a film. This process requires that the MFR₂ of the recycled polyethylene is low and controlled. The melt strength of the recycled polyethylene depends on the MFR₂ and the homogeneity of the recycled polyethylene composition (P). Strain hardening is required to blow a film. If the recycled polyethylene composition is not homogenous the film bubble will break or be unstable. To produce blown film bubble homogeneity is important. This is challenging for heterogenous materials obtained from recycling, especially PCR. When polyethylene is recycled chain scission occurs. The short chains formed by chain scission will increase the MFR₂ of the recycled polyethylene. This will impair the melt strength of the recycled polyethylene.

The MFR₂ for applications such as film blowing is typically below 5 g/10min. The recycled polyethylene can be used for other applications such as pipe extrusion, injection blow moulding, injection moulding and extrusion foaming applications. The MFR₂ is important for processability and mechanical strength of the final product.

In pipe applications melt strength is important for dimensional stability of the pipe. When pipes are extruded there is molten polymer inside the pipe walls. If the melt strength is low, the molten polymer will flow inside the pipe walls and the pipe will be thicker in the bottom part. To meet the mechanical properties of the pipe a low MFR₂ is required.

Hence, the invention relates to a process of recycling a polyethylene composition (P) from recycled polyethylene (A) and a copolymer (B) wherein the recycled polyethylene composition (P) comprises:
a) at least 50 weight% of recycled polyethylene (A), and
b) 0.5 to 15 weight% of an ethylene copolymer (B) comprising hydrolysable silicon-containing groups

compounding said recycled polyethylene composition (P),
wherein the recycled polyethylene composition (P) treated by 0.5 to 15 weight% of an ethylene copolymer (B) comprising hydrolysable silicon-containing groups has at least 15% lower MFR₂, as determined according to ISO 1133 at a temperature of 190°C and a load of 2.16 kg, compared to the recycled polyethylene (A).

It is an object of the invention to control or lower the MFR₂ of the recycled polyethylene composition (P). The recycled polyethylene (A) can be obtained from various processes of recycling. An example of such process is reclaimed polyethylene that can be obtained from post-consumer recycling or post-industrial recycling. The physical properties of recycled polyethylene depend on the source. It is thus an object of the invention to provide an efficient, simple, and reliable control of the MFR₂ of the recycled polyethylene. The object is reached by adding a sufficient amount of an ethylene copolymer (B) comprising hydrolysable silicon-containing groups.

Compounding polyethylene compositions is a well stablished technology. Thus, one advantage of the invention is that it can be implemented on present extrusion equipment.

The invention further relates to a recycled polyethylene composition (P) wherein the recycled polyethylene composition (P) comprises:
a) at least 50 weight% of recycled polyethylene (A), and
b) 0.5 to 15 weight% of an ethylene copolymer (B) comprising hydrolysable silicon-containing groups
wherein said recycled polyethylene composition (P) is compounded and that the polyethylene composition (P) after compounding has a MFR₂ of 0.4 to 4 gram/10 min, as determined according to ISO 1133 at a temperature of 190°C and a load of 2.16 kg.

The invention also relates to a recycled film comprising the recycled polyethylene composition (P) comprises:
a) at least 50 weight% of recycled polyethylene (A), and
b) 0.5 to 15 weight% of an ethylene copolymer (B) comprising hydrolysable silicon-containing groups,

compounding said recycled polyethylene composition (P),
wherein a film is formed from the recycled polyethylene composition (P).

The invention also relates to the use of an ethylene copolymer (B) comprising hydrolysable silicon-containing groups as an MFR₂ modifier for recycled polyethylene composition (P) wherein the recycled polyethylene composition (P) comprises:
a) at least 50 weight% of recycled polyethylene (A), and
b) 0.5 to 15 weight% of an ethylene copolymer (B) comprising hydrolysable silicon-containing groups.

Last the invention relates to the use of an ethylene copolymer (B) comprising hydrolysable silicon-containing groups as a compatibilizer modifier for recycled polyethylene composition (P) wherein the recycled polyethylene composition (P) comprises
a) at least 50 weight% of recycled polyethylene (A), and
b) 0.5 to 15 weight% of an ethylene copolymer (B) comprising hydrolysable silicon-containing groups.

The recycled polyethylene (A) comprises at least LDPE, HDPE and various polar polyethylene from adhesion layers and possibly other polymer fractions. To make a continuous matrix, with melt strength, ethylene copolymer (B) comprising hydrolysable silicon-containing groups is working as a compatibilizer. The effect of the ethylene copolymer (B) is that the homogeneity increases. The formed recycled polyethylene composition (P) has one phase that binds all parts together including even HDPE. One further effect is that the entire matrix takes the stress during film blowing.

### Detailed description

In one embodiment the amount of recycled polyethylene (A) is at least 75 weight%, preferably at least 80 weight%, or most preferably 90 weight%.

The recycled polyethylene (A) has suitably an MFR₂, as determined according to ISO 1133 at a temperature of 190°C and a load of 2.16 kg, of 1 to 15 g/10 min, more suitably 5 to 12 g/10 min.

In a preferable embodiment of the invention the MFR₂, as determined according to ISO 1133 at a temperature of 190°C and a load of 2.16 kg, of the recycled polyethylene is at least 20% lower compared to the recycled polyethylene (A), more suitable at least 30% lower.

The polyethylene composition (P) shall add up to 100%. The polyethylene composition (P) further can comprise additivities, pigments, and other polymer fractions. The polyethylene composition (P) can comprise pigment, suitably carbon black: This will increase the density of the recycled polyethylene composition (P). Additives are suitably added by masterbatches. If further polymer fractions are added into the recycled polyethylene composition (P) suitable virgin polyethylene is added. Most suitable no further polymer fraction is added.

In one embodiment the amount of a copolymer (B) comprising hydrolysable silicon-containing groups is from 1 to 10 weight%, more suitably 2 to 7 weight%, most suitably 2 to 5 weight%.

The amount of copolymer (B) is decided in relation to the desired MFR₂ of the recycled polyethylene composition (P). The desired MFR₂ of the polyethylene composition (P) is decided by the end use of the recycled polyethylene composition (P). The MFR₂, as determined according to ISO 1133 at a temperature of 190°C and a load of 2.16 kg, of the recycled polyethylene composition (P) has suitably an MFR₂ of 0.4 to 10 gram/10 min, more suitably 0.4 to 4 gram/10 min and most suitably an MFR₂ of 1 to 3 gram/10 min. It is an objective of the invention to have a low amount of a copolymer (B) comprising hydrolysable silicon-containing groups. This will improve the compounding process. It will make it simpler, more stable and a more homogenous composition. The amount of hydrolysable silicon-containing groups in the polyethylene is from 0.1 to 5 weight%, more suitable 0.5 to 2 weight%.

In another embodiment of the invention the ethylene copolymer (B) comprising hydrolysable silicon-containing groups is a low-density polyethylene (LDPE). The LDPE can be either recycled or virgin. Virgin means that the polymer has not been used. Due to the lack of recycled ethylene copolymer (B) comprising hydrolysable silicon-containing groups it is most suitable to use virgin sources. The LDPE is made in a high-pressure process. Another reason to use virgin ethylene copolymer (B) comprising hydrolysable silicon-containing groups is that the reactivity will decrease by use.

The invention is suitably free from peroxide and/or peroxide residues. Peroxide and/or peroxide residues can come from various steps in reactive compounding. Polyethylene can be treated by reactive compounding with peroxide in order to decrease the MFR₂. The peroxide will crosslink the polyethylene chains and enlarge the molecules. The peroxide residues are smelly, and furthermore, the handling of peroxides is troublesome. One object of the invention is to avoid peroxide and its residues.

In a preferred embodiment of the invention the entire process is free from peroxide or peroxide residues. The copolymer (B) comprising hydrolysable silicon-containing groups is suitably free from peroxide or peroxide residues. Meaning that the copolymer (B) comprising hydrolysable silicon-containing groups is a polyethylene, suitably a LDPE that is made in a high-pressure process.

In another embodiment of the invention the copolymer (B) comprising hydrolysable silicon-containing groups is a polyethylene that is grafted. Polyethylene can be grafted with silane containing groups such as ethylene-vinyl silane, which is well known.

In a preferred embodiment of the invention, the recycled polyethylene composition (P) is free from silane condensation catalyst, such as dibutyl tin dilaurate (DBTL) or dioctyl tin dilaurate (DOTL). DBTL and DOTL are organic tin compounds. Other examples of silane condensation catalysts are sulphonic acids. The purpose of a silane condensation catalyst is to crosslink the hydrolysable silicon-containing groups by a condensation reaction. It is preferred to avoid silane condensation catalyst since they are either harmful for the environment or involve strong acids. It is an objection of the invention to provide a recycling process of a polyethylene composition (P) wherein no silane condensation catalyst has been added through the recycling process. Thus, the recycled polyethylene composition (P) is free from silane condensation catalyst.

It is an object of the invention that articles made from a recycled polyethylene composition (P) are substantially free of odour and comparable to articles made from virgin polyethylene in relation to smell and mechanical properties.

The recycled polyethylene (A) suitably comprises LDPE, LLDPE and/or HDPE. The recycled polyethylene (A) further may comprise an acidic part such as EMAA, EAA, MAH-grafted polyolefine and/or a low molecular weight organic acid. In a more suitable embodiment is the low molecular weight organic acid is a residue from the delamination process. Examples of low molecular weight organic acids are formic acid and acetic acid.

The recycled polyethylene (A) can be obtained from post-consumer recycling. The recycled polyethylene (A) can also be obtained from post-industrial recycling. In a suitable embodiment the recycled polyethylene (A) is from post-consumer recycling. This is a more demanding process since the recycled polyethylene (A) is a mixture of various polyethylenes and contaminated by other mixed streams of other common plastics.

In a preferred embodiment the recycled polyethylene (A) is obtained from post-consumer recycling of a liquid food board-based packages. The liquid food board-packages can be with and without aluminium layer. Most suitably the liquid food board-packages are with aluminium layer. It should be noted that all streams that originates from PCR stream has a high degree of recycled polymers from other streams.

The properties of the recycled polyethylene vary. The variation of density of recycled polyethylene can be from 890 kg/m3 to 990 kg/m3. The colour can be any, but mostly no pigment. The ash content is below 2 weight% and the recycled polyethylene composition (P) is in the form of pellets or granules. The moisture content is below 0.1 weight%. Most properties of the recycled polyethylene composition (P) are the same as the recycled polyethylene.

### Experimental

### Drawings

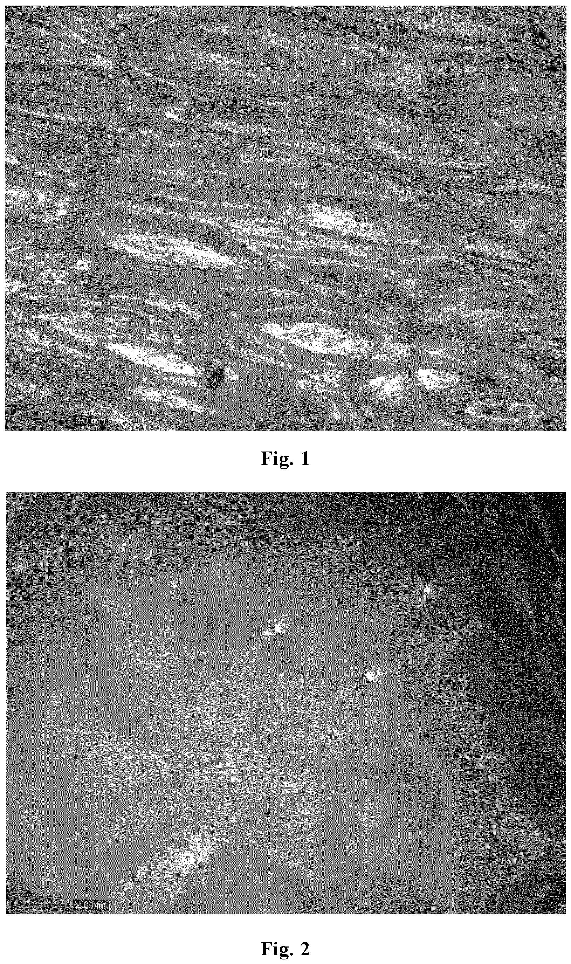

**Fig. 1** depicts a photograph of a film from comparative example 4, RPM 40; and
**Fig. 2** depicts a photograph of a film from Inventive example 7, RPM 60

### Measurement methods

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polyethylene is measured at a temperature 190°C and a load of 2.16 kg. All examples of compositions with at least 50 weight% of polyethylene are measured at 190°C.

Complex viscosity was measured at 190°C using a TA Instrument ARES-G2 TA rheometer. The configuration is a 25mm plate/plate geometry with 1% strain. Frequency sweep was from 100 to 0.1 rad/sec.

Elongation viscosity was measured at 150°C using a TA Instrument ARES-G2 rheometer equipped with an extensional viscosity fixture (EVF). The extension rate (Hencky rate) was 0.5 1/s and the final Hencky strain was 3.4.

Optical microscopy was performed using a Dino-Lite Digital microscope at 20x magnification.

### Materials

EVS is LE-4423, commercially available from Borealis. The EVS is a low-density polyethylene copolymer comprising hydrolysable silicon-containing groups. The copolymer is made in a high-pressure reactor. The density of the polymer is 923 kg/m³ and it has an MFR₂ of 1.0 g/lOmin.

Recycled polyethylene 1 has a MFR₂ of 8.7 g/lOmin. The polymer is obtained by collecting various liquid food board-based packages mainly from packages with layers of board, polymer and aluminium. First the board layer is separated, and then the aluminium layer is separated by an acid-based delamination method prior to regranulation. The liquid food board packages originate from PCR and comprise the following polymers regranulated: LDPE> LLDPE >ethylene-co-acrylic and/or -co-methacrylic acid>HDPE >PET> MAH-grafted polyolefins and pigments. The PCR further comprises contaminations that are decreased by melt filtration during the regranulation process.

Recycled polyethylene 2 has a MFR₂ of 4.2 g/10 min. The polymer is obtained by collecting various liquid food board-based packages mainly from packages with layers of board, polymer and aluminium. First the board layer is separated, and then the aluminium layer is separated by an acid-based delamination method prior to regranulation. The liquid food board packages originate from PCR and comprise the following polymers regranulated: LDPE> LLDPE >ethylene-co-acrylic or -co-methacrylic acid>HDPE >PET> MAH-grafted polyolefins and pigments. The PCR further comprises contaminations decreased or removed by melt filtration during the regranulation process.

Recycled polyethylene 3 has a MFR₂ of 4.4 g/lOmin. The polymer is obtained by collecting various liquid food board-based packages mainly from packages with layers of board, polymer and aluminium. First the board layer is separated, and then the aluminium layer is separated by an acid-based delamination method prior to regranulation. The liquid food board packages originate from PCR and comprise the following polymers regranulated: LDPE> LLDPE >ethylene-co-acrylic or -co-methacrylic acid>HDPE >PET> MAH-grafted polyolefins and pigments. The PCR further comprises contaminations decreased or removed by melt filtration during the regranulation process.

Recycled polyethylene 4 has a MFR₂ of 3.6 g/lOmin. The polymer is obtained by collecting various liquid food board-based packages mainly from packages with layers of board, polymer and aluminium. First the board layer is separated, and then the aluminium layer is separated by an acid-based delamination method prior to regranulation. The liquid food board packages originate from PCR and comprise the following polymers regranulated: LDPE> LLDPE >ethylene-co-acrylic or -co-methacrylic acid>HDPE >PET> MAH-grafted polyolefins and pigments. The PCR further comprises contaminations decreased or removed by melt filtration during the regranulation process.

LDPE-22 is 1922NO and is commercially available from Sabic. The polymer is made in a tubular reactor and is virgin and additive free. The density of the polymer is 919 kg/m³ and it has an MFR₂ of 22 g/10min.

LDPE-7 is 19N430 and is commercially available from Ineos. The density of the polymer is 920 kg/m³ and it has an MFR₂ of 7.5 g/10min.

LDPE-1 is LDPE 320E and is commercially available from Dow. The density of the polymer is 925 kg/m³ and it has an MFR₂ of 1 g/lOmin.

### Examples

The compositions shown in Table 1 were compounded in a single screw extruder SSE (Axon BX-25) at 220 rpm equipped with a water bath at room temperature before strand pellettization. The temperature settings of the extruder were 170, 220, 220, 220, 220, 220°C.

**Table 1**

| | **Comp. example 1** | **Comp. example 2** | **Inventive example 1** | **Inventive example 2** | **Inventive example 3** |
|---|---|---|---|---|---|
| Recycled polyethylene 1 [weight%] | 100 | | 97.5 | 95 | 90 |
| EVS [weight%] | | 100 | 2.5 | 5 | 10 |
| MFR₂ [g/10 min] | 8.7 | 0.9 | 2.9 | 1.1 | 0.4 |
| Relative difference [+/-%] | 0% | na | -67% | -87% | -95% |

In comparative example 1 the MFR₂ change has been measured in polymer composition with only recycled polyethylene 1. In Table 1 all examples have been preheated 5 minutes before the MFR₂ were measured.

In comparative example 2 only EVS is used. The MFR₂ remains similar. In inventive example 1-3 recycled polyethylene 1 is mixed with different amounts of EVS. The MFR₂ decreases with added amount of EVS.

The relative difference is calculated as the ratio of MFR₂ of the recycled polyethylene composition (P) divided by MFR₂ of the recycled polyethylene (A) minus 100%.

The examples in Table 2 were compounded in a single screw extruder SSE (Axon BX-25) at 220 rpm equipped with a water bath at room temperature before strand pellettization. The temperature settings of the extruder were 170, 220, 220, 220, 220, 220°C.

**Table 2**

| | **Comp. examp le 3** | **Inventi ve exampl e 4** | **Inventi ve exampl e5** | **Comp. examp le 4** | **Inventi ve exampl e 6** | **Inventi ve exampl e 7** | **Comp. examp le 5** | **Comp. examp le 6** |
|---|---|---|---|---|---|---|---|---|
| Recycled polyethyl ene 2 [weight% ] | 100 | 97.5 | 95 | | | | | |
| Recycled polyethyl ene 3 [weight% ] | | | | 100 | 97.5 | 95 | 97.5 | 95 |
| LDPE-1 | | | | | | | 2.5 | 5 |
| EVS [weight% ] | | 2.5 | 5 | | 2.5 | 5 | | |
| MFR₂ [g/10 min] | 4.2 | 3.0 | 1.3 | 4.4 | 2.1 | 1.0 | 2 | 3.9 |
| Relative difference [+/- %] | 0% | -28% | -69% | 0% | -52% | -77% | -4% | -11% |

In Table 2 all examples have been preheated 5 minutes before the MFR₂ were measured. The results are consistent with the results from Table 1.

The extruder and process conditions in Table 3 are the same as in Table 2.

**Table 3**

| | **Comp. example 7** | **Inventive example 8** | **Inventive example 9** |
|---|---|---|---|
| Recycled polyethylene 4 [weight%] | 100 | 97.5 | 95 |
| EVS [weight%] | | 2.5 | 5 |
| MFR₂ [g/10 min] | 3.6 | 1.3 | 0.48 |
| Relative difference [+/-%] | 0% | -64% | -87% |

Table 3 discloses further examples of the invention.

In Table 4 the complex viscosity changes are measured. The compositions were compounded on a single screw extruder SSE (Axon BX-25) at 220 rpm with the temperature settings of 170, 220, 220, 220, 220, 220°C before strand pellettization. The samples were then compression moulded in in a hydraulic press machine.

Press temperature 155 °C

Time: 2 min pre-heating, 2 min full press, 5 min cooling to prepare a cylindrical sample (25 mm diameter and 1 mm thickness).

The complex viscosity was measured at 190°C. The configuration was a 25mm plate/plate geometry with 1% strain. Frequency sweep was from 100 to 0.1 rad/sec.

**Table 4**

| | **Comp. example 1** | **Inventive example 1** | **Inventive example 2** | **Comp. example 3** | **Inventive example 4** | **Inventive example 5** |
|---|---|---|---|---|---|---|
| Recycled polyethylene polymer 1 [weight%] | 100 | 97.5 | 95 | | | |
| Recycled polyethylene 2 [weight%] | | | | 100 | 97.5 | 95 |
| EVS [weight%] | | 2.5 | 5 | | 2.5 | 5 |
| Complex viscosity [Pa.s] 0.1 rad/s | 2705 | 3954 | 4423 | 2727 | 3076 | 4281 |
| Complex viscosity [Pa.s] 1 rad/s | 783 | 1408 | 1442 | 1567 | 1754 | 2173 |
| Complex viscosity [Pa.s] 100 rad/sec | 153 | 212 | 199 | 269 | 300 | 331 |

The addition of EVS to the recycled polyethylene increases the complex viscosity of the composition. This is a proof of molecular enlargement and shear thinning of the recycled polyethylene composition (P).

In Table 5 the effect of EVS on the elongation viscosity is reported for Recycled polyethylene 2. The effect of strain hardening (higher melt elasticity and viscosity) for the inventive example can be observed.

**Table 5**

| | **Comp. example 3** | **Inventive example 4** | **Inventive example 5** |
|---|---|---|---|
| Recycled polyethylene 2 [weight%] | 100 | 97.5 | 95 |
| EVS [weight%] | | 2.5 | 5 |
| Elongation viscosity [Pa.s] after 0.01 s | 2724 | 3015 | 3135 |
| Elongation viscosity [Pa.s] after 2.0 s | 119492 | 134515 | 211241 |
| Maximum elongation viscosity [Pa.s] | 125522 | 177091 | 437487 |
| Step time at maximum elongation viscosity (s) | 2.6 | 3.1 | 3.8 |

The examples show the improved melt elasticity properties of the invention.

Additional examples of mixing virgin LDPE with different MFR2 with EVS are shown in Table 6. The compositions were made according to Table 1.

**Table 6**

| | **Comp. example 8** | **Comp. example 9** | **Comp. example 10** | **Comp. example 11** | **Comp. example 12** |
|---|---|---|---|---|---|
| LDPE-22 [weight%] | 100 | 97.5 | | | |
| LDPE-7 | | | 100 | 97.5 | 95 |
| | | | | | |
| EVS [weight%] | | 2.5 | | 2.5 | 5 |
| MFR₂ [g/10 min] | 21.1 | 19.1 | 7.2 | 6.7 | 6.5 |
| Relative difference [+/- %] | 0% | -9% | 0% | -7% | -10% |

When adding EVS to virgin LDPE the MFR₂ is decreased. The decrease is due to the low MFR₂ of the EVS and the decrease of MFR₂ is significantly lower compared to that observed in the inventive examples.

Additional film examples have been produced on a laboratory scale film blowing machine. The examples in Table 7 show the improved film forming properties of the invention. The recycled polyethylene compositions from comparative example 4 and inventive examples 6 and 7 were compounded on a single screw Brabender & Collins extruder 19/25D, air cooled, equipped with a barrier screw 2.5:1 with a mixing element. The revolutions per minute (RPM) of the extruder were varied.
Film blowing die head with a cooling ring (diameter 2 cm)
Temperature setting (profile): 190-210-210-210°C

**Table 7**

| | **Comp. example 4** | **Inventive example 6** | **Inventive example 7** |
|---|---|---|---|
| Recycled polyethylene 3 [weight%] | 100 | 97.5 | 95 |
| EVS [weight%] | | 2.5 | 5 |
| MFR₂ [g/10 min] | 4.4 | 2.1 | 1.0 |
| | | | |
| Relative difference [+/-%] | 0% | -52% | -77% |
| RPM 40 | No film formed | Film formed, Greatly improved film quality stable | Film formed, Film quality unstable |
| RPM 60 | No film formed | | Film formed, Greatly improved film quality stable |

The inventive examples show that stable film production can be achieved by the invention. The MFR₂ is lowered and the blowability is improved.

A microscope photo of a film blown from the recycled material without EVS (comparative example 4) shows an inhomogeneous material with separate phases. The dispersed phases are elongated in the machine direction due orientation effects at the exit of the die. During film blowing the continuous phase will take the stresses and as the phase is only a part of the total volume the stress in this phase becomes too high, easily leading to breakage. With the addition of 5% EVS the microscope photo shows a homogenous material. The EVS works as a compatibilizer that evens out the phase boundaries. Meaning that the phases interact mechanically, which means that the total volume of the material can take up stresses. Thus, improved film blowing properties of inventive example 6 and 7.

## Claims

1. Process of recycling a polyethylene composition (P), wherein the recycled polyethylene composition (P) comprises:
a) at least 50 weight% of recycled polyethylene (A), and
b) 0.5 to 15 weight% of an ethylene copolymer (B) comprising hydrolysable silicon-containing groups,
compounding said recycled polyethylene composition (P),
wherein the recycled polyethylene composition (P) treated by 0.5 to 15 weight% of an ethylene copolymer (B) comprising hydrolysable silicon-containing groups has at least 15% lower MFR₂, as determined according to ISO 1133 at a temperature of 190°C and a load of 2.16 kg, compared to the recycled polyethylene (A).

2. Process according to claim 1, wherein the amount of recycled polyethylene (A) is at least 75 weight%, preferably at least 80 weight%.

3. Process according to any prior claim, wherein the amount of a copolymer (B) comprising hydrolysable silicon-containing groups is from 1 to 10 weight%.

4. Process according to any prior claim, wherein ethylene copolymer (B) comprising hydrolysable silicon-containing groups is an LDPE.

5. Process according to claim 4, wherein the copolymer (B) comprising hydrolysable silicon-containing groups is free from peroxide or peroxide residues.

6. Process according to any prior claim 5, wherein the recycling process is free from silane condensation catalyst.

7. Process according to claim 1 to 4 or claim 6, wherein a copolymer (B) comprising hydrolysable silicon-containing groups is a polyethylene that is grafted.

8. Process according to any prior claim, wherein recycled polyethylene (A) comprises LDPE, LLDPE and/or HDPE.

9. Process according to claim 8, wherein the polyethylene composition (P) comprises an acidic part.

10. Process according to claim 9, wherein the acidic part comprises EMAA, EAA, MAH grafted polyolefine and/or a low molecular weight organic acid.

11. Process according to claim 8 to 10 wherein the recycled polyethylene is obtained from a liquid food board-based packages.

12. Recycled polyethylene composition (P), wherein the recycled polyethylene composition (P) comprises:
a) at least 50 weight% of recycled polyethylene (A), and
b) 0.5 to 15 weight% of an ethylene copolymer (B) comprising hydrolysable silicon-containing groups
wherein said recycled polyethylene composition (P) is compounded, said polyethylene composition (P) after the compounding having a MFR₂ of 0.4 to 4 g/10 min, as determined according to ISO 1133 at a temperature of 190°C and a load of 2.16 kg.

13. A recycled film, wherein the film is provided by forming a film from the recycled polyethylene composition (P) according to claim 12.

14. Use of an ethylene copolymer (B) comprising hydrolysable silicon-containing groups as an MFR₂ modifier for a recycled polyethylene composition (P), wherein the recycled polyethylene composition (P) comprises
a) at least 50 weight% of recycled polyethylene (A), and
b) 0.5 to 15 weight% of an ethylene copolymer (B) comprising hydrolysable silicon-containing groups.

15. Use of an ethylene copolymer (B) comprising hydrolysable silicon-containing groups as a compatibilizer modifier for a recycled polyethylene composition (P), wherein the recycled polyethylene composition (P) comprises
a) at least 50 weight% of recycled polyethylene (A), and
b) 0.5 to 15 weight% of an ethylene copolymer (B) comprising hydrolysable silicon-containing groups.

## Patentansprüche

1. Verfahren zum Recyceln einer Polyethylenzusammensetzung (P), wobei die recycelte Polyethylenzusammensetzung (P) umfasst:
a) mindestens 50 Gew.% recyceltes Polyethylen (A) und
b) 0,5 bis 15 Gew.% eines Ethylencopolymers (B), das hydrolysierbare siliciumhaltige Gruppen enthält,
Compoundieren der recycelten Polyethylenzusammensetzung (P),
wobei die recycelte Polyethylenzusammensetzung (P), die mit 0,5 bis 15 Gew.-% eines Ethylencopolymers (B) behandelt wurde, das hydrolysierbare siliciumhaltige Gruppen enthält, im Vergleich zu dem recycelten Polyethylen (A) eine um mindestens 15 % niedrigere MFR₂ aufweist, wie gemäß ISO 1133 bei einer Temperatur von 190°C und einer Beladung mit 2,16 kg bestimmt.

2. Verfahren nach Anspruch 1, wobei die Menge an recyceltem Polyethylen (A) mindestens 75 Gew.%, vorzugsweise mindestens 80 Gew.%, beträgt.

3. Verfahren nach einem vorhergehenden Anspruch, wobei die Menge eines Copolymers (B), das hydrolysierbare siliciumhaltige Gruppen enthält, 1 bis 10 Gew.-% beträgt.

4. Verfahren nach einem vorhergehenden Anspruch, wobei das Ethylencopolymer (B), das hydrolysierbare siliciumhaltige Gruppen enthält, ein LDPE ist.

5. Verfahren nach Anspruch 4, wobei das Copolymer (B), das hydrolysierbare siliciumhaltige Gruppen enthält, frei von Peroxid oder Peroxidresten ist.

6. Verfahren nach einem vorhergehenden Anspruch, wobei das Recyclingverfahren frei von einem Silan-Kondensationskatalysator ist.

7. Verfahren nach einem der Ansprüche 1 bis 4 oder 6, wobei ein Copolymer (B) mit hydrolysierbaren siliciumhaltigen Gruppen ein gepfropftes Polyethylen ist.

8. Verfahren nach einem vorhergehenden Anspruch, wobei das recycelte Polyethylen (A) LDPE, LLDPE und/oder HDPE umfasst.

9. Verfahren nach Anspruch 8, wobei die Polyethylenzusammensetzung (P) einen sauren Anteil enthält.

10. Verfahren nach Anspruch 9, wobei der saure Teil EMAA-, EAA-, MAHgepfropftes Polyolefin und/oder eine organische Säure mit niedrigem Molekulargewicht umfasst.

11. Verfahren nach einem der Ansprüche 8 bis 10, wobei das recycelte Polyethylen aus einer Verpackung auf Kartonbasis für flüssige Lebensmittel gewonnen wird.

12. Recycelte Polyethylenzusammensetzung (P), wobei die recycelte Polyethylenzusammensetzung (P) umfasst:
a) mindestens 50 Gew.% recyceltes Polyethylen (A), und
b) 0,5 bis 15 Gew.-% eines Ethylencopolymers (B), das hydrolysierbare siliciumhaltige Gruppen enthält,
wobei die recycelte Polyethylenzusammensetzung (P) compoundiert wurde und die Polyethylenzusammensetzung (P) nach dem Compoundieren eine MFR₂ von 0,4 bis 4 g/10 min aufweist, wie gemäß ISO 1133 bei einer Temperatur von 190°C und einer Beladung mit 2,16 kg bestimmt.

13. Eine recycelte Folie, wobei die Folie durch Ausbilden einer Folie aus der recycelten Polyehtylenzusammensetzung (P) gemäß Anspruch 12 bereitgestellt wird.

14. Verwendung eines Ethylencopolymers (B), das hydrolysierbare siliciumhaltige Gruppen umfasst, als MFR₂-Modifizierungsmittel für eine recycelte Polyethylenzusammensetzung (P), wobei die recycelte Polyethylenzusammensetzung (P) umfasst
a) mindestens 50 Gew.% recyceltes Polyethylen (A) und
b) 0,5 bis 15 Gew.% eines Ethylencopolymers (B), das hydrolysierbare siliciumhaltige Gruppen enthält.

15. Verwendung eines Ethylencopolymers (B), das hydrolysierbare siliciumhaltige Gruppen umfasst, als Kompatibilitätsmodifizierungsmittel für eine recycelte Polyethylenzusammensetzung (P), wobei die recycelte Polyethylenzusammensetzung (P) umfasst
a) mindestens 50 Gew.% recyceltes Polyethylen (A) und
b) 0,5 bis 15 Gew.% eines Ethylencopolymers (B), das hydrolysierbare siliciumhaltige Gruppen enthält.

## Revendications

1. Procédé de recyclage d'une composition de polyéthylène (P), dans lequel la composition de polyéthylène recyclé (P) comprend :
a) au moins 50 % en poids de polyéthylène recyclé (A), et
b) 0,5 à 15 % en poids d'un copolymère d'éthylène (B) comprenant des groupes hydrolysables contenant du silicium,
le mélangeage de ladite composition de polyéthylène recyclé (P),
dans lequel la composition de polyéthylène recyclé (P) traitée par 0,5 à 15 % en poids d'un copolymère d'éthylène (B) comprenant des groupes hydrolysables contenant du silicium a un MFR₂ inférieur d'au moins 15 %, tel que déterminé selon la norme ISO 1133 à une température de 190 °C et une charge de 2,16 kg, par rapport au polyéthylène recyclé (A).

2. Procédé selon la revendication 1, dans lequel la quantité de polyéthylène recyclé (A) est d'au moins 75 % en poids, de préférence d'au moins 80 % en poids.

3. Procédé selon l'une quelconque des revendications précédentes, dans lequel la quantité d'un copolymère (B) comprenant des groupes hydrolysables contenant du silicium est de 1 à 10 % en poids.

4. Procédé selon l'une quelconque des revendications précédentes, dans lequel le copolymère d'éthylène (B) comprenant des groupes hydrolysables contenant du silicium est un LDPE.

5. Procédé selon la revendication 4, dans lequel le copolymère (B) comprenant des groupes hydrolysables contenant du silicium est exempt de peroxyde ou de résidus de peroxyde.

6. Procédé selon l'une quelconque des revendications précédentes 5, dans lequel le procédé de recyclage est exempt de catalyseur de condensation silane.

7. Procédé selon la revendication 1 à 4 ou la revendication 6, dans lequel un copolymère (B) comprenant des groupes hydrolysables contenant du silicium est un polyéthylène qui est greffé.

8. Procédé selon l'une quelconque des revendications précédentes, dans lequel le polyéthylène recyclé (A) comprend du LDPE, du LLDPE et/ou du HDPE.

9. Procédé selon la revendication 8, dans lequel la composition de polyéthylène (P) comprend une partie acide.

10. Procédé selon la revendication 9, dans lequel la partie acide comprend une polyoléfine greffée EMAA, EAA, MAH et/ou un acide organique de bas poids moléculaire.

11. Procédé selon la revendication 8 à 10, dans lequel le polyéthylène recyclé est obtenu à partir d'emballages à base de carton pour aliments liquides.

12. Composition de polyéthylène recyclé (P), dans laquelle la composition de polyéthylène recyclé (P) comprend :
a) au moins 50 % en poids de polyéthylène recyclé (A), et
b) 0,5 à 15 % en poids d'un copolymère d'éthylène (B) comprenant des groupes hydrolysables contenant du silicium
dans laquelle ladite composition de polyéthylène recyclé (P) est mélangée, ladite composition de polyéthylène (P) après le mélangeage ayant un MFR₂ de 0,4 à 4 g/10 min, tel que déterminé selon la norme ISO 1133 à une température de 190 °C et une charge de 2,16 kg.

13. Film recyclé, dans lequel le film est obtenu par formage d'un film à partir de la composition de polyéthylène recyclé (P) selon la revendication 12.

14. Utilisation d'un copolymère d'éthylène (B) comprenant des groupes hydrolysables contenant du silicium comme modificateur du MFR₂ pour une composition de polyéthylène recyclé (P), dans laquelle la composition de polyéthylène recyclé (P) comprend
a) au moins 50 % en poids de polyéthylène recyclé (A), et
b) 0,5 à 15 % en poids d'un copolymère d'éthylène (B) comprenant des groupes hydrolysables contenant du silicium.

15. Utilisation d'un copolymère d'éthylène (B) comprenant des groupes hydrolysables contenant du silicium comme modificateur d'agent de compatibilité pour une composition de polyéthylène recyclé (P), dans laquelle la composition de polyéthylène recyclé (P) comprend
a) au moins 50 % en poids de polyéthylène recyclé (A), et
b) 0,5 à 15 % en poids d'un copolymère d'éthylène (B) comprenant des groupes hydrolysables contenant du silicium.
